# EUROPÄISCHE PATENTANMELDUNG

(11) **EP 0 913 363 A1**
(43) Veröffentlichungstag der Anmeldung: **06.05.1999**
(21) Anmeldenummer: 97119111.9
(22) Anmeldetag: 03.11.1997
(51) Int. Cl.: C03B 19/10, C03B 5/00, C03B 5/12, C03B 3/02

(54) **Verfahren und Vorrichtung zur thermischen Umsetzung von Reststoffen**

(71) Anmelder: DBI DEUTSCHES BRENNSTOFFINSTITUT ROHSTOFF & ANLAGENTECHNIK GmbH, 09599 Freiberg (DE)
(72) Erfinder: Flick, Thomas, Dipl.-Ing., 09599 Freiberg (DE); Eidner, Dieter, Dr., 09599 Freiberg (DE); Seirlehner, Leo, Dipl.-Ing., 4040 Linz/Urfahr (AT); Kadlubowski, Wolfgang, Dipl.-Ing., 09599 Freiberg (DE); Schieber, Andreas, Dipl.-Wirtsch., 73441 Bopfingen (DE)
(74) Vertreter: Lorenz, Werner, Dipl.-Ing.

(57) **Zusammenfassung**

Bei einem Verfahren zur thermischen Umsetzung von Reststoffen bei Temperaturen oberhalb des Schmelzpunktes von mineralischen Bestandteilen der Reststoffe zur Gewinnung von Feststoffen und Abgasen werden die Reststoffe in einen Schmelzzyklon eingebracht. Die Reststoffe werden in dem Schmelzzyklon zu flüssiger Schlacke und Gas umgesetzt. Das Gas und die flüssige Schlacke werden über eine untere Öffnung aus dem Schmelzzyklon abgeführt. Das Gas und die flüssige Schlacke werden aus dem Schmelzzyklon einem Zwischenraum zugeführt. Das Gas wird durch eine Quenchwassereinspritzung stark abgekühlt. Die flüssige wird Schlacke zur Abkühlung und Granulierung einem Wasserbad zugeführt.

## Beschreibung

Die Erfindung betrifft ein Verfahren zur thermischen Umsetzung von Reststoffen nach der im Oberbegriff von Anspruch 1 näher definierten Art. Des weiteren betrifft die Erfindung eine Vorrichtung zur Durchführung des Verfahrens gemaß den Ansprüchen 10 und 11.

Aus der DE 44 39 939 A1 ist ein gattungsgemäßes Verfahren sowie eine Vorrichtung zur Durchführung des beschriebenen Verfahrens bekannt. Dabei findet in einem Schmelzzyklon, welcher über einem Unterofen angeordnet ist, bei Temperaturen oberhalb von 1300° C eine Vergasung, Verbrennung oder Mineralisierung der Reststoffe statt. Die dabei entstehenden Reaktionsprodukte werden in den Unterofen ausgetragen und es erfolgt eine Trennung der Reaktionsprodukte in eine flüssige Schlacke und in ein Abgas.

Dabei soll die Verdampfung von in dem Reststoff vorhandenen Schwermetallen durch eine gezielte Einstellung des Sauerstoffpartialdruckes im Schmelzzyklon sowie der Anwendung einer Aufblaslanze im Unterofen so erleichtert werden, daß eine Restschlacke mit äußerst niedrigem Schwermetallgehalt resultiert. Des weiteren werden den Reststoffen vor ihrem Eintrag in den Schmelzzyklon unterschiedliche Zuschlagsstoffe in definierter Menge zugemischt.

Unteröfen, wie sie dort beschrieben sind, weisen jedoch störanfällige und kostenintensive Ausmauerungen auf. Außerdem sind die langen Aufheiz- und Abkühlungszeiten sowie der hohe Verbrauch an Erdgas und Sauerstoff solcher Unteröfen nachteilig, welcher durch den Einsatz einer Nachverbrennungseinrichtung im Unterofen noch erhöht wird. Schließlich bringt auch der manuell aufwendige Abzug der flüssigen und heißen Schlacke über die Auslaßöffnung Nachteile mit sich.

Die DE 42 00 341 A1 beschreibt ein Verfahren zur Vergasung von Abfall unter Ausbildung einer Schlacke und eines Gases, wobei die entstehende Schlacke in flüssiger Form abgezogen wird.

Diese Vergasung findet in einer Zyklonkammer bei Temperaturen von mehr als 1200° C und einer Luftzahl von λ=0,4 bis 0,8 statt. Anschließend werden das Gas und die flüssige Schlacke gemeinsam durch einen Bodenaustrag abgezogen, wobei die flüssige Schlacke in einem Unterofen gesammelt und das Gas getrennt aus diesem Unterofen abgezogen wird. Gegebenenfalls kann das Gas einer Gasreinigung und einer energetischen Nutzung zugeführt werden.

Alternativ dazu ist es dabei auch möglich, das Gas bereits in der Zyklonkammer von der flüssigen Schlacke zu trennen. Das Gas verläßt dabei die Zyklonkammer über einen Gasabzug mit einem von oben in die Zyklonkammer eingeführten Tauchrohr. Die flüssige Schlacke hingegen fließt durch die selbe Öffnung wie bei der oben beschriebenen Ausführungsform und wird in einem Wasserbehälter abgekühlt. Der Wasserdampf, welcher dabei entsteht, gelangt teilweise vom Unterofen durch die Öffnung in den Schmelzzyklon, um dort zersetzt zu werden.

Bei der dort beschriebenen getrennten Führung von Gas und Schlacke aus dem Schmelzzyklon ist jedoch nachteilig, daß mit dem durch die Schlackeöffnung hochsteigenden Wasserdampf die Schlacke überwiegend im Bereich der Öffnung unter den Schmelzpunkt gekühlt wird und dabei teilweise erstarrt. Dadurch verstopft die Schlackeöffnung und die typischen Strömungsverhältnisse des Schmelzzyklons werden gestört, wodurch die notwendigen Reaktionsbedingungen für das Verfahren ungünstig beeinflußt werden. Der bei dem beschriebenen Verfahren verwendete Unterofen weist darüber hinaus die bereits oben dargelegten Nachteile auf.

Der vorliegenden Erfindung liegt daher die Aufgabe zugrunde, ein Verfahren und eine Vorrichtung zu schaffen, mit welcher Reststoffe flexibel und wirtschaftlich in einen Feststoff sowie in Abgase umgewandelt werden können.

Erfindungsgemäß wird diese Aufgabe durch die im kennzeichnenden Teil von Anspruch 1 genannten Verfahrensschritte sowie durch die in den Ansprüchen 10 bzw. 11 genannten Vorrichtungsmerkmale gelöst.

Durch die Zuführung des Gases und der flüssigen Schlacke in den erfindungsgemäßen Zwischenraum kann das Gas vorteilhafterweise sehr gut von der flüssigen Schlacke getrennt werden.

Die Abkühlung des Gases durch die Quenchwassereinspritzung, welche eine Abkühlung mit einer sehr hohen Temperaturdifferenz innerhalb einer sehr kurzen Zeit darstellt, ermöglicht vorteilhafterweise eine sehr rasche, jedoch gleichzeitig sehr einfache und ohne großen Aufwand durchführbare Abkühlung des Gases. Weiterhin ist dabei vorteilhaft, daß alle im Gas befindlichen Schadstoffe, wie z.B. Schwermetalle oder Halogene, sich im festen Zustand aus dem Gas ausscheiden und somit ein relativ sauberes Abgas erhalten wird.

Die Abkühlung der flüssigen Schlacke in dem Wasserbad stellt eine sehr einfache und sichere Methode dar, um einen laugungsresistenten Feststoff als aus der Schlacke hergestelltes Endprodukt zu erhalten.

In einer vorteilhaften Ausführungsform der Erfindung kann vorgesehen sein, daß die flüssige Schlacke den Zwischenraum bei relativ geringer Kühlung durchläuft und dem unter dem Zwischenraum sich befindlichen Wasserbad zugeführt wird, und daß das Gas nach Durchströmen des Zwischenraumes zur Durchführung der Quenchwassereinspritzung einer Quencheinrichtung zugeführt wird.

Durch die sehr schnelle Abführung des Gases können die sich in dem Gas befindlichen Halogene und Schwermetalle nicht mehr in Kontakt mit der abzukühlenden flüssigen Schlacke kommen und diese somit nicht mehr verunreinigen, wodurch ein sehr schadstoffarmes Endprodukt entsteht. Des weiteren ist durch die separate Quenchwassereinspritzung für das Gas eine sehr gut zu steuernde Möglichkeit zur Abkühlung und Reinigung des Gases geschaffen. Dabei werden sowohl das Gas als auch die flüssige Schlacke in dem Zwischenraum nur sehr wenig abgekühlt.

Alternativ dazu ist es in einer anderen Ausführungsform der Erfindung möglich, daß die flüssige Schlacke und das Gas in dem Zwischenraum bzw. Granulierraum einer direkten Quenchwassereinspritzung unterzogen werden.

Dies stellt eine vereinfachte Möglichkeit zur schnellen Abkühlung des Gases dar, wobei in diesem Fall auch die flüssige Schlacke durch die Quenchwassereinspritzung gekühlt wird, was vorteilhafterweise eine Verkürzung des Verfahrens mit sich bringt.

Weitere vorteilhafte Ausgestaltungen und Weiterbildungen ergeben sich aus den Unteransprüchen und aus den nachfolgend anhand der Zeichnung beschriebenen Ausführungsbeispielen.

Es zeigt:
- Fig. 1: eine erste Ausführungsform der erfindungsgemäßen Vorrichtung zur Durchführung des erfindungsgemäßen Verfahrens;
- Fig. 2: einen Schnitt nach der Linie II-II aus Fig. 1;
- Fig. 3: eine zweite Ausführungsform der erfindungsgemäßen Vorrichtung zur Durchführung des erfindungsgemäßen Verfahrens; und
- Fig. 4: einen Schmelzzyklon gemäß Fig. 1 und Fig. 3 in einer vergrößerten Darstellung.

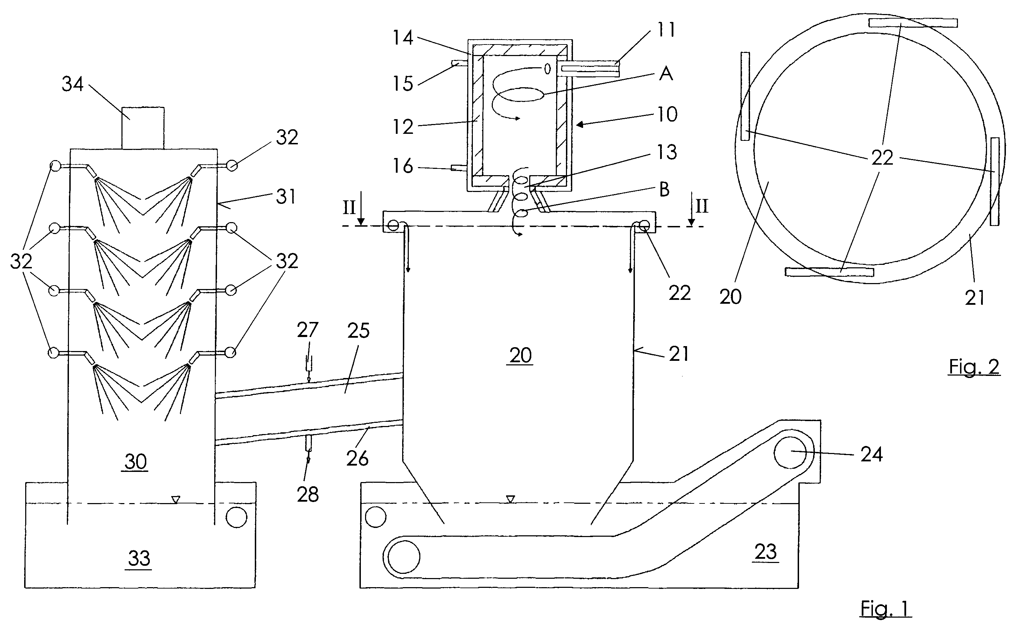

Gemäß Fig. 1 ist ein Schmelzzyklon 10 oberhalb eines Zwischenraumes 20 dargestellt, welcher wiederum neben einer Quencheinrichtung bzw. Quenchreaktor 30 angeordnet ist.

Der Schmelzzyklon 10 ist in an sich bekannter Weise aufgebaut und weist eine Zufuhreinrichtung 11, ein Gehäuse 12, eine untere Öffnung 13 sowie einen Kühlwassermantel 14 mit einer Kühlwasserzuleitung 15 und einer Kühlwasserableitung 16 auf. Wie Fig. 4 zu entnehmen ist, weist der Schmelzzyklon 10 an der Oberseite seines Gehäuses 12 des weiteren eine Impulsbrennereinrichtung 17 auf, deren Funktion später noch näher erläutert wird.

Nicht dargestellte Reststoffe, deren Partikelgröße kleiner als 1 mm, günstigerweise kleiner als 0,5 mm ist, werden über die Zufuhreinrichtung 11 dem Schmelzzyklon 10 zugeführt. Die Zerkleinerung der Reststoffe auf die angegebene Partikelgröße vor der Zufuhr in den Schmelzzyklon 10 erfolgt dabei in nicht dargestellten Einrichtungen bekannter Bauart.

In dem Schmelzzyklon 10 wird der Reststoff mit zugeführtem Sauerstoff sowie einem brennbaren Gas, wie z.B. Erdgas, bei ca. 1500°C umgesetzt, wobei es sich bei dem Reststoff um einen an sich brennbaren, Energie enthaltenden Stoff handelt und das Erdgas lediglich zugeführt wird, um eine Zündung auszulösen und die notwendige Verbrennungstemperatur zu erhalten. Die durch einen Pfeil A angedeutete, spiralförmige, sehr intensive Bewegung der Feststoffe innerhalb des Schmelzzyklons 10 ermöglicht eine sehr kleine Ausbildung desselben. Durch die in dem Schmelzzyklon 10 ablaufende Verbrennung oder Vergasung wird der Feststoff in eine flüssige Schlacke und ein Gas umgesetzt. Die Schlacke und das Gas verlassen den Schmelzzyklon 10 gemäß einem Pfeil B durch die untere Öffnung 13 in den Zwischenraum 20 mit einer Geschwindigkeit, die meist mehr als 60 m/s beträgt. Wie in Fig. 4 dargestellt, ist die untere Öffnung 13 konisch ausgeführt.

An der Innenseite des nicht ausgemauerten Zwischenraumes 20 befinden sich an einer Wandung 21 Berieselungseinrichtungen 22, welche in an sich bekannter Weise, z.B. als Überlauf oder Wasserdüsen, ausgeführt sind und die Wandung 21 über ihren gesamten Umfang mit Wasser besprühen. Dadurch wird die Wandung 21 des Zwischenraumes 20 vor Überhitzung geschützt und es werden eventuell an die Wandung 21 gelangende Schlacketeilchen abgespült. Dabei entstehender Wasserdampf wird mit dem Gas der Quencheinrichtung 30 zugeführt.

Die flüssige Schlacke fällt durch den Zwischenraum 20 in ein Wasserbad 23, welches den Zwischenraum 20 nach außen gasdicht abschließt. Die flüssige Schlacke wird dort abgekühlt, granuliert, sedimentiert und über eine Austragseinrichtung 24, z.B. einer Kratzerkette, zu einer nicht dargestellten Weiterverarbeitung befördert. Der dabei entstehende Feststoff ist ein laugungsresistenter, inerter, glasartiger Feststoff, der in der Bauindustrie einsetzbar ist.

Das Wasser des Wasserbades 23 wird in diesem Fall im Kreislauf geführt, wobei eine Reinigung, Neutralisierung und Wärmeauskopplung erforderlich ist, da nur gereinigtes und neutralisiertes Wasser in das Wasserbad 23 zurückgeführt werden sollte. Dabei ist die in dem Kreislauf geführte Wassermenge so groß, daß eine Verdampfung in dem Zwischenraum 20 nur in sehr geringem Umfang und lediglich partiell auftritt, um die Bewegung der Schlacke und des Gases nicht zu beeinträchtigen.

Das Gas und der gebildete Wasserdampf strömen im wesentlichen ungekühlt durch eine an der Wandung 21 angeordnete Leitung 25 in die Quencheinrichtung 30. Die Leitung 25 ist zum Schutz vor Überhitzung mit einem Kühlwassermantel 26 versehen, der eine Kühlwasserzuleitung 27 und eine Kühlwasserableitung 28 aufweist. Dabei kann die Kühlwasserzuleitung 27 direkt mit der Kühlwasserableitung 16 des Schmelzzyklons 10 verbunden und somit in den Kühlkreislauf des Schmelzzyklons 10 integriert sein, was in Fig. 1 jedoch nicht dargestellt ist. Somit kann ein separater Wasserkreislauf zur Kühlung der Leitung 25 eingespart werden. Zum Schutz vor Überhitzung kann die Leitung 25 in einer nicht dargestellten, alternativen Ausführungsform auch ausgemauert sein. Die Leitung 25 sollte dabei in jedem Fall eine möglichst große lichte Weite aufweisen.

An einer Wandung 31 der Quencheinrichtung 30 sind Druckzerstäubungsdüsen 32 über den gesamten Umfang der Wandung 31 und in mehreren Ebenen angeordnet. Je nach Größe der Quencheinrichtung 30 ist selbstverständlich auch eine andere Anordnung der Druckzerstäubungsdüsen 32 denkbar. Durch die Wasserstrahlen, die von Druckzerstäubungsdüsen 32 ausgehen, wird das Gas auf seinen Wasserdampftaupunkt abgekühlt, wodurch die in dem Gas enthaltenen Schadstoffe, insbesondere Halogene und Schwermetalle, aus dem Gas gelöst werden und dabei vom gasförmigen in den festen Zustand übergehen. Diese löslichen Komponenten des Gases werden somit in das Wasser überführt, welches sich in einer auf der Unterseite der Quencheinrichtung 30 angeordneten sogenannten Quenchwassertasse 33 befindet. Die Quenchwassertasse 33 schließt die Quencheinrichtung 30 an ihrer Unterseite gasdicht ab.

Das Wasser der Quenchwassertasse 33 wird wie das Wasser des Wasserbades 23 ebenfalls im Kreislauf geführt, wobei eine Reinigung, Neutralisierung und Wärmeauskopplung ebenso erforderlich ist. Dadurch werden die in das Wasser der Quenchwassertasse 33 überführten Schwermetalle und Halogene entfernt und können als Staub bzw. Salz einer getrennten Entsorgung zugeführt werden. Es ist dabei auch eine gemeinsame Behandlung der beiden Wassermengen aus dem Wasserbad 23 und der Quenchwassertasse 33 möglich.

Das wie oben beschrieben gekühlte Gas verläßt die Quencheinrichtung 30 über eine Leitung 34 an ihrer Oberseite und kann einer nicht dargestellten, nachgeschalteten, energetischen Nutzung bzw. einer Staubaushaltung, wie z.B. einem Staubzyklon zugeführt werden. Das in der Quencheinrichtung 30 entstehende Abgas ist bei oxidierendem Betrieb ein Abgas/Rauchgas und bei reduzierendem Betrieb ein Brenngas mit den Gaskomponenten CO und CO₂.

Alternativ dazu kann die Gaskühlung auch durch nicht dargestellte Verdampfungskühler üblicher Bauart mit Zweistoffdüsen und nachgeschaltetem Staubfilter realisiert werden. Dabei würde dann lediglich eine so große Wassermenge eingedüst werden, daß das gesamte Wasser verdampft und es würde kein Wasser nach unten in die Quenchwassertasse 33 gelangen.

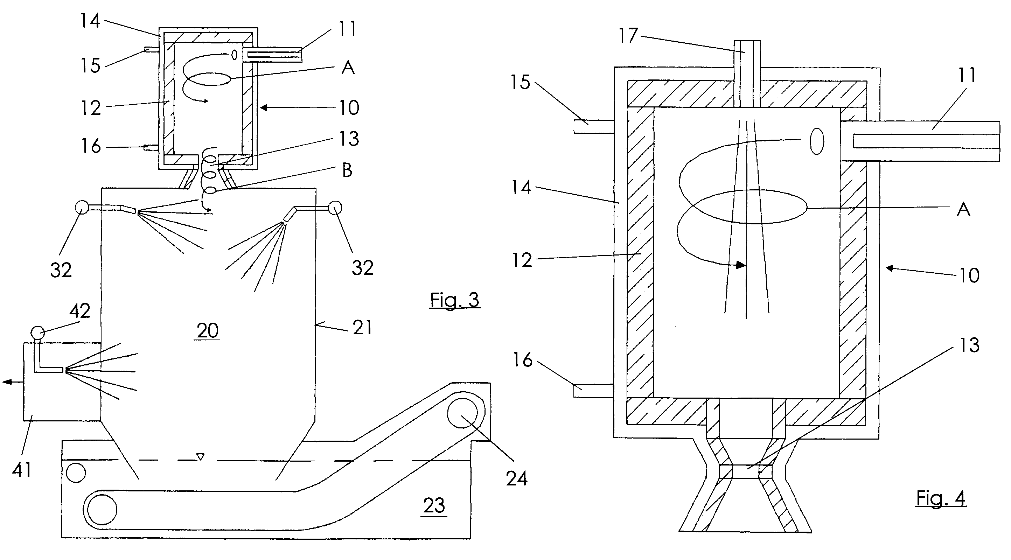

Fig. 3 zeigt ein zweites Ausführungsbeispiel eines Aufbaus zur Durchführung des Verfahrens, wobei die Druckzerstäubungsdüsen 32 dort direkt in dem Zwischenraum 20 angeordnet sind. Am Umfang der Wandung 21 befinden sich in diesem Fall vier Druckzerstäubungsdüsen 32, wobei diese auch in mehreren Ebenen und in geringerer oder größerer Anzahl angeordnet sein können. Durch die von den Druckzerstäubungsdüsen 32 ausgehenden Wasserstrahlen werden die flüssige Schlacke und das Gas, welche aus dem Schmelzzyklon 10 durch die untere Öffnung 13 mit einer ähnlich hohen Geschwindigkeit wie oben beschrieben austreten, direkt nach dem Austreten stark abgekühlt, was als Direktquenchung bezeichnet werden kann. Die hierbei entstehende Schlacke weist einen höheren Schadstoffanteil auf als die durch das oben beschriebene Verfahren entstandene Schlacke.

Unterhalb des Zwischenraumes 20 befindet sich wie in Fig. 1 ebenfalls ein Wasserbad 23 mit einer Austragseinrichtung 24 zur Abkühlung, Granulierung, Sedimentation sowie den Austrag der Schlacke. An der Wandung 21 des Zwischenraumes 20, welcher hier auch als Granulierraum 20 bezeichnet werden kann und welcher nicht ausgemauert ist, da ein über die Druckzerstäubungsdüsen 32 hinausgehender thermischer Schutz der Wandung 21 nicht notwendig ist, befindet sich ein Gasaustritt 41, an welchem eine weitere Druckzerstäubungsdüse 42 angebracht ist.

Das Wasser in dem Wasserbad 23 wird auch hier in einem Kreislauf geführt und in einer ständigen Wasseraufbereitung einer Reinigung, Neutralisierung sowie Wärmekopplung unterworfen. Wiederum ist dabei die in dem Kreislauf enthaltene Wassermenge so groß, daß in dem Granulierraum 20 lediglich eine partielle Verdampfung auftritt.

Wenn die Druckzerstäubungsdüsen 32 direkt unterhalb des Schmelzzyklons 10 angeordnet sind und eine Direktquenchung der Schlacke und des Abgases durchgeführt wird, könnte der Fall eintreten, daß abgekühlte Gas- und Wasserdampfströmungen durch zentrale, aufwärts gerichtete Strömungen innerhalb des Schmelzzyklons 10 in denselben gelangen und die Schlacke unter ihren Schmelzpunkt abkühlt. Dadurch könnte die Schlacke teilweise örtlich erstarren und die untere Öffnung 13 des Schmelzzyklons 10 verstopfen. Eine Verstopfung der unteren Öffnung 13 des Schmelzzyklons 10 führt zwangsläufig zu einer Außerbetriebnahme der Anlage.

Dies kann jedoch durch das Anbringen der Impulsbrennereinrichtung 17, wie in Fig. 4 dargestellt, verhindert werden, da dieser einen der Zyklonströmung axial entgegengerichteten Impuls liefert und somit die aufwärts gerichtete Strömung stört, was zu einer erheblichen Verringerung der Ansaugung innerhalb der aufwärts gerichteten Zyklonströmung führt. Die Impulsbrennereinrichtung 17 ist dabei für beide beschriebenen Verfahren geeignet.

## Patentansprüche

1. Verfahren zur thermischen Umsetzung von Reststoffen bei Temperaturen oberhalb des Schmelzpunktes von mineralischen Bestandteilen der Reststoffe zur Gewinnung von Feststoffen und Abgasen, wobei
1.1 die Reststoffe in einen Schmelzzyklon (10) eingebracht werden,
1.2 die Reststoffe in dem Schmelzzyklon (10) zu flüssiger Schlacke und Gas umgesetzt werden,
1.3 das Gas und die flüssige Schlacke über eine untere Öffnung (13) aus dem Schmelzzyklon (10) abgeführt werden,
**dadurch gekennzeichnet,** daß
1.4 das Gas und die flüssige Schlacke aus dem Schmelzzyklon (10) einem Zwischenraum (20) zugeführt werden,
1.5 das Gas durch eine Quenchwassereinspritzung stark abgekühlt wird, und
1.6 die flüssige Schlacke zur Abkühlung und Granulierung einem Wasserbad (23) zugeführt wird.

2. Verfahren nach Anspruch 1,
**dadurch gekennzeichnet,** daß
das Gas durch die Quenchwassereinspritzung auf seinen Wasserdampftaupunkt abgekühlt wird.

3. Verfahren nach Anspruch 1 oder 2,
**dadurch gekennzeichnet,** daß
die flüssige Schlacke den Zwischenraum (20) bei relativ geringer Kühlung durchläuft und dem unter dem Zwischenraum (20) sich befindlichen Wasserbad (23) zugeführt wird, und daß das Gas nach Durchströmen des Zwischenraumes (20) zur Durchführung der Quenchwassereinspritzung einer Quencheinrichtung (30) zugeführt wird.

4. Verfahren nach einem der Ansprüche 1, 2, oder 3,
**dadurch gekennzeichnet,** daß
in dem Gas enthaltene Schadstoffe einer Quenchwassertasse (33) zugeführt werden.

5. Verfahren nach einem der Ansprüche 1 bis 4,
**dadurch gekennzeichnet,** daß
das Gas die Quencheinrichtung (30) über eine Leitung (34) verläßt und einer nachgeschalteten energetischen Nutzung oder einer Staubaushaltung zugeführt wird.

6. Verfahren nach Anspruch 1 oder 2,
**dadurch gekennzeichnet,** daß
die flüssige Schlacke und das Gas in dem Zwischenraum bzw. Granulierraum (20) einer direkten Quenchwassereinspritzung unterzogen werden.

7. Verfahren nach Anspruch 6,
**dadurch gekennzeichnet,** daß
das Gas den Granulierraum (20) über einen Gasaustritt (41) verläßt und einer nachgeschalteten energetischen Nutzung oder einer Staubaushaltung zugeführt wird.

8. Verfahren nach einem der Ansprüche 1 bis 7,
**dadurch gekennzeichnet,** daß
die Schlacke nach der Abkühlung und Granulierung in dem Wasserbad (23) über eine Austragseinrichtung (24) zur Weiterverarbeitung abgeführt wird und/oder das Wasser des Wasserbades (23) in einem Kreislauf mit Reinigung, Neutralisierung und Wärmeauskopplung geführt wird.

9. Verfahren nach Anspruch 4 und 8,
**dadurch gekennzeichnet,** daß
das Wasser der Quenchwassertasse (33) in einem Kreislauf mit Reinigung, Neutralisierung und Wärmeauskopplung geführt wird, wobei die Wasserkreisläufe des Wasserbades (23) und der Quenchwassertasse (33) einer gemeinsamen Reinigung, Neutralisierung und Wärmeauskopplung unterzogen werden.

10. Vorrichtung zur Durchführung des Verfahrens nach einem der Ansprüche 1 bis 5 oder 8 bis 9, mit einem Schmelzzyklon (10), einem Zwischenraum (20), einer Quencheinrichtung (30), einem unter dem Zwischenraum angeordneten Wasserbad (23) mit einer Austragseinrichtung (24), einer Leitung (25) zwischen dem Zwischenraum (20) und der Quencheinrichtung (30), einer unter der Quencheinrichtung (30) angeordneten Quenchwassertasse (33) sowie einer im oberen Bereich der Quencheinrichtung (30) angeordneten Leitung (34).

11. Vorrichtung zur Durchführung des Verfahrens nach einem der Ansprüche 1 bis 2 oder 6 bis 9, mit einem Schmelzzyklon (10) und einem Zwischenraum bzw. Granulierraum (20), einem unter dem Granulierraum angeordneten Wasserbad (23) mit einer Austragseinrichtung (24) sowie einem im seitlichen Bereich des Granulierraumes (20) angeordneten Gasaustritt (41), wobei in dem Granulierraum (20) Druckzerstäubungsdüsen (32) zur Quenchwassereinspritzung angeordnet sind.

12. Vorrichtung nach Anspruch 10 oder 11,
**dadurch gekennzeichnet,** daß
der Schmelzzyklon (10) mit einem Kühlwassermantel (14) mit einer Kühlwasserzuleitung (15) und einer Kühlwasserableitung (16) versehen ist.

13. Vorrichtung nach Anspruch 10 oder 12,
**dadurch gekennzeichnet,** daß
die Leitung (25) mit einem Kühlwassermantel (26) mit einer Kühlwasserzuleitung (27) und einer Kühlwasserableitung (28) versehen ist, wobei die Kühlwasserzuleitung (27) der Leitung (25) mit der Kühlwasserableitung (16) des Schmelzzyklons (10) verbunden ist.

14. Vorrichtung nach einem der Ansprüche 10 oder 12 bis 13,
**dadurch gekennzeichnet,** daß
in der Quencheinrichtung (30) an einer Wandung (31) derselben über den Umfang der Wandung (31) verteilt Druckzerstäubungsdüsen (32) zur Quenchwassereinspritzung angebracht sind.

15. Vorrichtung nach einem der Ansprüche 10 oder 12 bis 14,
**dadurch gekennzeichnet,** daß
an der Wandung (21) des Zwischenraumes (20) Berieselungseinrichtungen (22) angeordnet sind.

16. Vorrichtung nach einem der Ansprüche 10 bis 15,
**dadurch gekennzeichnet,** daß
an der Oberseite des Schmelzzyklons (10) eine Impulsbrennereinrichtung (17) angeordnet ist.

17. Vorrichtung nach einem der Ansprüche 10 bis 16,
**dadurch gekennzeichnet,** daß
die untere Öffnung (13) des Schmelzzyklons (10) konisch ausgebildet ist.
